# FASCICULE DE BREVET EUROPEEN

(11) **EP 0 909 000 B1**
(45) Date de publication et mention de la délivrance du brevet: **19.03.2008**
(21) Numéro de dépôt: 98410106.3
(22) Date de dépôt: 24.09.1998
(51) Int. Cl.: H02H 7/16

(54) **Dispositif de protection d'une batterie de condensateurs**
Schutzeinrichtung für eine Kondensatorbatterie
Protection device for a capacitor bank

(30) Priorité: 10.10.1997 FR 9712927
(43) Date de publication de la demande: 14.04.1999
(73) Titulaire: SCHNEIDER ELECTRIC INDUSTRIES SAS, 92500 Rueil-Malmaison (FR)
(72) Inventeur: Pouliquen, Bernard, 38050 Grenoble cedex 09 (FR); Lupin, Jean-Marc, 38050 Grenoble cedex 09 (FR)
(74) Mandataire: Jouvray, Marie-Andrée

(56) Documents cités:
- DE-A- 2 252 434
- DE-A- 2 903 319

## Description

L'invention concerne un dispositif de protection d'une batterie de condensateurs destinée à être connectée à des conducteurs d'un réseau électrique triphasé, dispositif comportant un premier groupe de condensateurs connectés en étoile à un premier point neutre, un second groupe d'impédances connectées en étoile à un second point neutre, un dispositif de détection d'un déséquilibre de tension entre les premier et second points neutres, dispositif de détection commandant l'actionnement d'un dispositif de déconnexion de la batterie lorsque le déséquilibre dépasse un seuil prédéterminé.

Les batteries de compensation sont souvent réalisées à partir de condensateurs haute tension connectés en double étoile. La défaillance d'un condensateur, due par exemple au claquage interne d'éléments capacitifs, provoque un déséquilibre entre les deux étoiles. Il est connu (DE-A-3.029.177, DE-A- 2.903.319) de détecter un tel déséquilibre au moyen d'un transformateur de courant ou de tension connecté entre les points neutres des deux étoiles et de déconnecter la batterie lorsque le déséquilibre dépasse une certaine valeur.

Il a par ailleurs été proposé de détecter de manière analogue la défaillance d'un condensateur dans une batterie comportant trois condensateurs seulement connectés en étoile. Dans ce cas, une seconde étoile est constituée par des résistances et une défaillance d'un condensateur provoque également un déséquilibre entre les deux étoiles.

Les dispositifs connus sont coûteux, notamment en raison des problèmes d'isolement et parfois d'encombrement.

L'invention a pour but un dispositif de protection permettant de réduire le coût de l'ensemble, et éventuellement son volume.

Selon l'invention, ce but est atteint par le fait que le dispositif de détection d'un déséquilibre de tension comporte un premier diviseur résistif, avec une première résistance entre le premier point neutre et un premier point milieu et une seconde résistance, très inférieure à la première, connectée entre le premier point milieu et la terre, au moins une troisième résistance, comportant une première borne connectée au second point neutre et une seconde borne connectée à la terre, et un relais à maximum de tension connecté entre le premier point milieu et la première borne de la troisième résistance.

On obtient ainsi une protection double étoile différentielle ne posant pas de problème d'isolement quelle que soit la nature des éléments de la seconde étoile.

Dans le cas où les deux étoiles sont constituées par des condensateurs, une quatrième résistance de valeur très supérieure à la troisième est connectée entre le second point neutre et la première borne de la troisième résistance de manière à constituer un second diviseur résistif entre le second point neutre et la terre.

Selon un développement de l'invention, lorsque la seconde étoile est constituée par des résistances, le dispositif peut comporte une pluralité de modules comportant chacun un condensateur du premier groupe et une résistance du second groupe connectés en série entre une première borne du module, destinée à être connectée au premier point neutre et une seconde borne du module, destinée à être connectée au second point neutre, une troisième borne du module, connectée au point commun audit condensateur et à ladite résistance, étant destinée à être connectée à un des conducteurs du réseau.

L' intégration dans une même cuve d'un condensateur et d'une résistance, formant un sous-ensemble standard, permet de réduire sensiblement le coût de la batterie de condensateurs.

Les avantages et caractéristiques de l'invention ressortiront plus clairement de la description suivante de différents modes de réalisation, donnés à titre d'exemples non limitatifs représentés par les dessins annexés dans lesquels :
La figure 1 représente un dispositif de protection selon l'art antérieur,
Les figures 2 et 3 représentent deux modes de réalisation particuliers d'un dispositif selon l'invention,
Les figures 4 à 7 représentent divers modes de réalisation de modules pouvant être utilisés dans les dispositifs selon les figures 2 et 3,
La figure 8 représente une variante du dispositif selon la figure 3 utilisant des modules diviseurs.

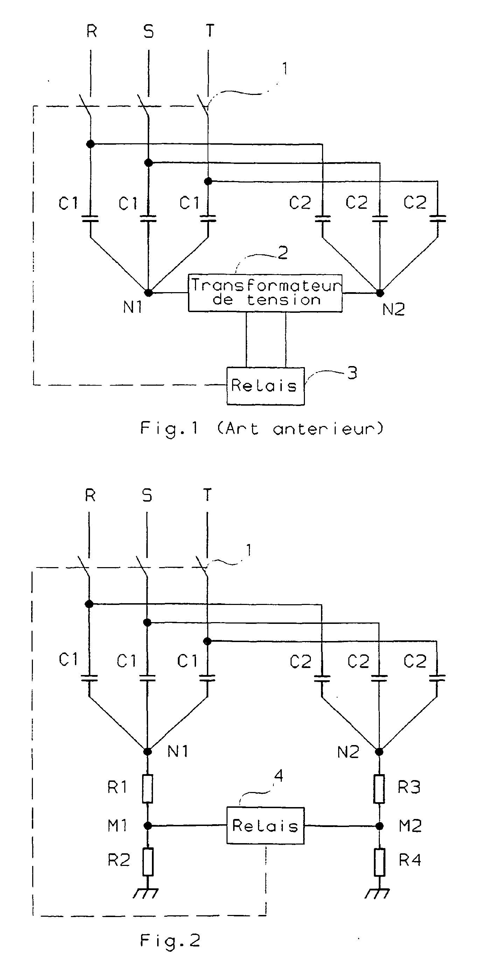

Selon la figure 1, une batterie de condensateurs double étoile de type connu comporte un premier groupe de trois condensateurs C1 connectés en étoile à un premier point neutre N1. Un second groupe de trois condensateurs C2 est connecté en étoile à un second point neutre N2. Un condensateur de chaque groupe est connecté, par l'intermédiaire d'un interrupteur 1, à chacun des conducteurs de phase, R, S, T, d'un réseau électrique triphasé.

En cas de défaillance d'un des condensateurs, la variation de capacité du condensateur entraîne un déséquilibre entre les deux étoiles. Il est ainsi possible, par détection de ce déséquilibre, de protéger la batterie de condensateurs. Dans l'art antérieur, ce déséquilibre est détecté au moyen d'un transformateur de courant ou plus généralement, comme sur la figure 1, de tension 2 connecté entre les points neutres N1 et N2. Le transformateur 2 est connecté à un relais à seuil 3 qui provoque l'ouverture des interrupteurs 1 lorsque la tension entre N1 et N2 dépasse une certaine valeur. La déconnexion de la batterie s'effectue donc automatiquement en cas de défaillance de l'un des condensateurs.

Dans le cas de batteries de faible puissance, le câblage double étoile ci-dessus implique la présence de six condensateurs minimum. Cela conduit à une puissance de condensateur faible par rapport aux possibilités techniques actuelles en terme de puissance unitaire. le remplacement des condensateurs C2 de la seconde étoile par des résistances, ou par toute autre impédance, permet d'utiliser dans la première étoile des condensateurs C1 de plus forte puissance unitaire pour une même puissance de batterie, c'est à dire de réduire le coût de l'ensemble, tout en maintenant la possibilité de protection de la batterie due au montage double étoile.

La figure 2 représente un premier mode de réalisation particulier de l'invention. Les deux étoiles sont du même type que sur la figure 1. Le transformateur 2 de tension est supprimé. Chacun des points neutres, N1 et N2, est relié à la terre par l'intermédiaire d'un pont diviseur résistif. Un premier pont diviseur résistif, connectant N1 à la terre, comporte une résistance R1, de valeur élevée, connectée entre N1 et un point milieu M1 du diviseur, et une seconde résistance R2, de valeur très inférieure à R1, connectée entre M1 et la terre. Le second pont diviseur résistif comporte, de manière analogue, des résistances R3 et R4 en série entre N2 et la terre, avec un point milieu M2, la résistance R4 étant très inférieure à R3. A titre d'exemple non limitatif, le rapport entre les valeurs des résistances R1 et R2, ou R3 et R4 est supérieure à 10, par exemple de l'ordre de 200. Les valeurs des résistances des ponts diviseurs doivent être adaptées aux tensions de déséquilibre correspondant aux différents types de défauts que l'on souhaite détecter et à la plage de mesure du relais 4. Leur précision est également adaptée aux variations minimum de tension que l'on souhaite détecter.

En l'absence de défaillance les points neutres N1 et N2 sont pratiquement au même potentiel. Par contre, en cas de défaillance d'un condensateur, la tension au point neutre de l'étoile capacitive correspondante peut varier de quelques centaines de volts. L'utilisation des diviseurs résistifs permet la détection du déséquilibre entre les points neutres N1 et N2 à l'aide d'un relais de tension 4 connecté directement entre les points milieux M1 et M2 des diviseurs résistifs. Comme sur la figure 1, le relais 4 commande l'ouverture des interrupteurs 1, donc la déconnexion de la batterie, en cas de déséquilibre supérieur à une valeur prédéterminée. Le relais 4 n'a pas à être isolé et peut être constitué par tout relais basse tension de type connu.

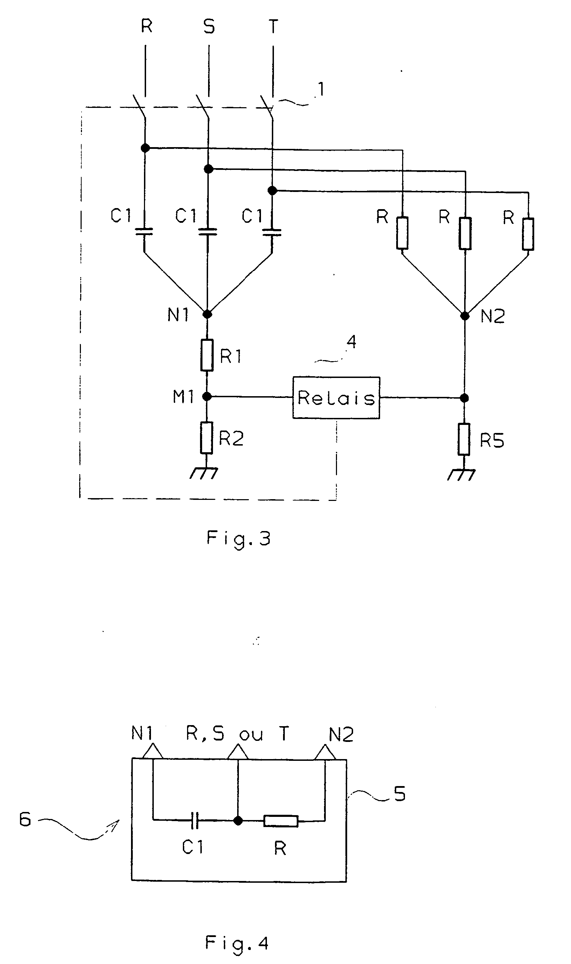

Le second mode de réalisation de l'invention, selon la figure 3, diffère de celui de la figure 2 en ce que la seconde étoile est une étoile résistive, les condensateurs C2 étant remplacés par des résistances R. Les résistances R ont une valeur suffisamment élevée pour limiter les pertes. Dans ce mode de réalisation, le second diviseur résistif, R3, R4, de la figure 2 peut être remplacé par une simple résistance R5 connectant le point neutre N2 de l'étoile résistive à la terre et le relais 4 est connecté directement entre le point milieu M1 et le point neutre N2. En effet, dans ce cas, le point N2, confondu avec le point M2 de la figure 2, sert de référence au relais 4 car il n'est pas affecté directement par la défaillance d'un condensateur de l'étoile capacitive.

Le dispositif selon l'invention peut être constitué à partir d'éléments discrets tous disposés dans un même boîtier. Cependant, l'utilisation de sous-ensembles ou modules, peut permettre de réduire le coût, grâce à une certaine standardisation, et éventuellement l'encombrement du dispositif.

Dans le mode de réalisation préférentiel représenté à la figure 4, deux éléments correspondants C1 et R des étoiles capacitive et résistive de la batterie selon la figure 3 sont disposés dans une même cuve 5 de condensateur de manière à former un module 6 standard. Un tel sous-ensemble est moins cher, plus compact et plus fiable que l'utilisation séparée d'un condensateur C1 et d'une résistance R. En effet, à cause de problèmes d'isolement une telle résistance R doit normalement être enrobée dans un matériau isolant. Par contre, si elle est introduite dans la cuve d'un condensateur rempli de diélectrique, ce problème ne se pose plus. Comme représenté à la figure 4, le sous-ensemble 6 est constitué par une cuve 5 comportant une résistance R et un condensateur C1 connectés en série entre deux bornes du module 6 destinées à être connectées respectivement aux points neutres N2 et N1. Le point commun à la résistance R et au condensateur C1 est connecté à une troisième borne du module 6, destinée à être connectée à l'un des conducteurs de phase (R, S, T) du réseau électrique. Trois modules 6, connectés respectivement à chacun des conducteurs de phase du réseau, permettent de constituer les deux étoiles de la batterie de condensateurs. Celle-ci est ensuite complétée par un point diviseur résistif connecté entre N1 et la terre, une résistance R5, connectée entre N2 et la terre, et un relais 4 pour former un dispositif selon la figure 3.

L'intégration de la résistance R dans la même cuve que le condensateur C1 peut permettre d'assurer la décharge du condensateur C1 aussi bien pendant le transport du module, les bornes N1 et N2 étant alors reliées, que lors de la mise hors tension de la batterie, à travers les résistances R, R5 et la terre. On peut ainsi éventuellement supprimer la résistance de décharge classiquement connectée en parallèle avec un condensateur haute tension.

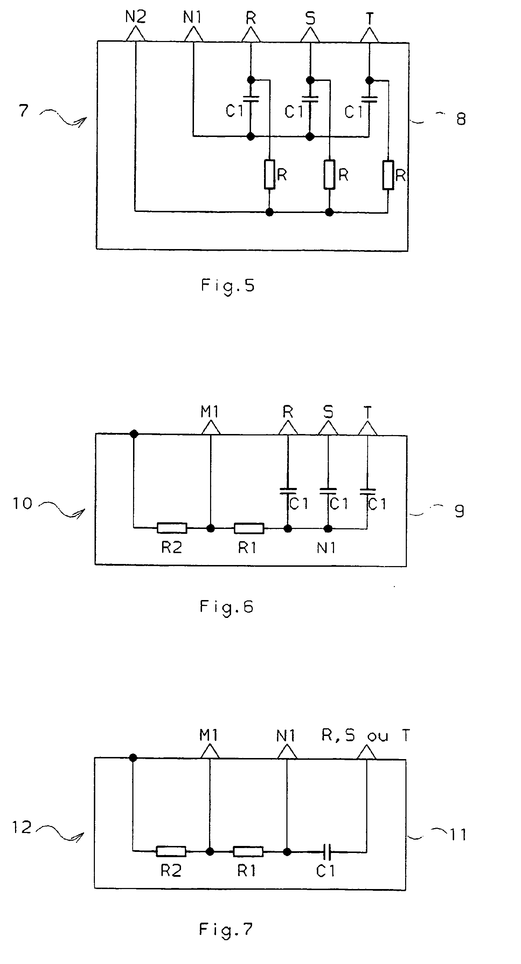

La figure 5 représente un mode de réalisation dans lequel la batterie comporte un condensateur triphasé associé à trois résistances formant la seconde étoile. Le sous-ensemble 7 de la figure 5 comporte une cuve 8 comportant trois bornes d'entrée destinées respectivement à être connectées aux conducteurs R, S et T du réseau. Un condensateur 1 est connecté entre chacune des bornes d'entrée et une borne formant le point neutre N1, tandis qu'une résistance R est connectée entre chacune des bornes d'entrée et une autre borne formant le point neutre N2. Ce sous-ensemble 8 est alors associé à un pont diviseur résistif connecté entre N1 et la terre, à une résistance R5, connectée entre N2 et la terre, et à un relais 4, pour former un dispositif selon la figure 3.

Pour certaines batteries, les sous-ensembles 6 et 7 ne sont pas les mieux adaptés. Il peut être plus avantageux d'intégrer alors un pont diviseur résistif dans la cuve 9 d'un condensateur triphasé. Le sous-ensemble 10 de la figure 6 comporte ainsi, dans une cuve 9, trois condensateurs C1 connectés respectivement à trois bornes d'entrée destinées à être connectées respectivement aux conducteurs R, S, T. Les trois condensateurs C1 sont connectés à un point neutre N1, à l'intérieur de la cuve 9, connecté par l'intermédiaire d'une résistance R1 élevée à une borne formant le point milieu M1 du diviseur résistif. Cette borne M1 est connectée par l'intermédiaire d'une résistance R2, très inférieure à R1, à la cuve 9.

Deux sous-ensembles 10 complétés par un relais 4 connecté entre les bornes M1 des deux sous-ensembles, et dont les cuves 9 sont connectées à la terre, forment un dispositif selon la figure 2.

Il est également possible, comme représenté à la figure 7, d'intégrer le diviseur résistif associé à une étoile dans la cuve 11 d'un condensateur monophasé de cette étoile. Le sous-ensemble 12 comporte alors dans la cuve 11, un condensateur C1 connecté entre une borne formant le point neutre N1 et une borne d'entrée destinée à être connectée à l'un des conducteurs, R, S ou T, du réseau. Une résistance R1 est connectée entre la borne N1 et une borne M1 formant le point milieu du diviseur résistif. Une résistance R2 est connectée entre la borne M1 et la cuve 11. Pour former une étoile capacitive associée à un pont diviseur résistif, le sous-ensemble 12 est complété par deux condensateurs monophasés connectés entre les autres conducteurs du réseau et la borne N1, tandis que la cuve 11 est connectée à la terre.

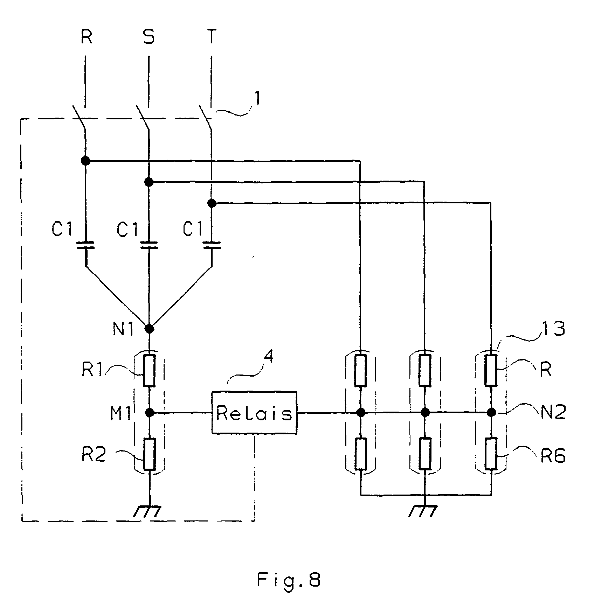

Une variante du mode de réalisation de la figure 3 est illustrée à la figure 8. La résistance R5 de la figure 4 est remplacée par une pluralité de résistances R6 disposées en parallèle entre le point neutre N2 et la terre. Sur la figure 3, le dispositif comporte alors quatre ponts diviseurs qui peuvent être standardisés. Le premier pont diviseur, associé à l'étoile capacitive est constitué par les résistances R1 et R2, tandis que trois autres ponts diviseurs, constitués chacun par une résistance R et une résistance R6, constituent l'étoile résistive et la résistance R5 associée. Chaque pont diviseur est de préférence constitué par un sous-ensemble 13, comportant deux résistances en série, dont l'une (R6, R2) est beaucoup plus faible que l'autre (R, R1), connectées entre deux bornes, une borne additionnelle étant connectée au point commun aux deux résistances du sous-ensemble.

Un sous-ensemble 13 constituant le premier diviseur résistif peut également être utilisé en combinaison avec les sous-ensembles 6 et 7 pour former un dispositif selon la figure 3.

## Revendications

1. Dispositif de protection d'une batterie de condensateurs destinée à être connectée à des conducteurs (R, S, T) d'un réseau électrique triphasé, dispositif comportant un premier groupe de condensateurs (C1) connectés en étoile à un premier point neutre (N1), un second groupe d'impédances (C2, R) connectées en étoile à un second point neutre (N2), un dispositif de détection d'un déséquilibre de tension entre les premier et second points neutres (N1, N2), dispositif de détection commandant l'actionnement d'un dispositif (1) de déconnexion de la batterie lorsque le déséquilibre dépasse un seuil prédéterminé, dispositif de protection **caractérisé en ce que** le dispositif de détection d'un déséquilibre de tension comporte un premier diviseur résistif, avec une première résistance (R1) entre le premier point neutre (N1) et un premier point milieu (M1) et une seconde résistance (R2), très inférieure à la première, connectée entre le premier point milieu (M1) et la terre, au moins une troisième résistance (R4, R5), comportant une première borne connectée au second point neutre (N2) et une seconde borne connectée à la terre, et un relais (4) à maximum de tension connecté entre le premier point milieu (M1) et la première borne de la troisième résistance (R4, R5).

2. Dispositif selon la revendication 1, **caractérisé en ce que** les impédances du second groupe d'impédances sont des condensateurs (C2) et **en ce qu'**une quatrième résistance (R3) de valeur très supérieure à la troisième (R4) est connectée entre le second point neutre (N2) et la première borne de la troisième résistance (R4) de manière à constituer un second diviseur résistif entre le second point neutre (N2) et la terre.

3. Dispositif selon la revendication 1, **caractérisé en ce que** les impédances du second groupe d'impédances sont des résistances (R).

4. Dispositif selon la revendication 3, **caractérisé en ce qu'**il comporte une pluralité de modules (6) comportant chacun un condensateur (C1) du premier groupe et une résistance (R) du second groupe connectés en série entre une première borne du module, destinée à être connectée au premier point neutre (N1), et une seconde borne du module, destinée à être connectée au second point neutre (N2), une troisième borne du module, connectée au point commun audit condensateur et à ladite résistance, étant destinée à être connectée à un des conducteurs (R, S, T) du réseau.

5. Dispositif selon l'une quelconque des revendications 1 à 3, **caractérisé en ce qu'**il comporte au moins un module monophasé (12) comportant dans une cuve (11) un condensateur (C1) connecté en série avec les première et seconde résistance (R1, R2) d'un diviseur résistif entre une borne d'entrée du module, destinée à être connectée à un des conducteurs (R, S, T) du réseau, et la cuve (11), une borne du module connectée au point commun audit condensateur (C1) et à ladite première résistance (R1) étant destinée à être connectée au point neutre (N1) de l'étoile à laquelle appartient ledit condensateur, et une autre borne du module, connectée au point commun auxdits première et seconde résistances (R1, R2) constituant le point milieu (M1) dudit diviseur résistif.

6. Dispositif selon l'une quelconque des revendications 1 à 3, **caractérisé en ce qu'**il comporte au moins un module triphasé (10) comportant dans une cuve (9) trois condensateurs (C1) couplés en étoile entre trois bornes d'entrée du module, destinées respectivement à être connectées aux conducteurs (R, S, T) du réseau, et un point neutre (N1), situé à l'intérieur de la cuve et connecté à la cuve par l'intermédiaire des première et seconde résistances (R1, R2) d'un diviseur résistif, une borne du module, connectée au point commun auxdits première et seconde résistances (R1, R2), formant le point milieu (M1) dudit diviseur résistif.

7. Dispositif selon l'une quelconque des revendications 1 à 3, **caractérisé en ce qu'**il comporte un module triphasé (7) comportant dans une cuve (8) trois condensateurs (C1) couplés en étoile entre trois bornes d'entrée du module, destinées respectivement à être connectées aux conducteurs (R, S, T) du réseau et une borne du module formant le premier point neutre (N1), et trois résistances (R) couplés en étoile entre les trois bornes d'entrée et une autre borne du module formant le second point neutre (N2).

8. Dispositif selon la revendication 3, **caractérisé en ce qu'**il comporte une pluralité de résistances (R6) disposées en parallèle entre le second point neutre (N2) et la terre pour former la troisième résistance (R5) et constituant chacun avec une résistance (R) du second groupe d'impédances un diviseur résistif, chaque diviseur résistif (R1, R2, ; R, R6) étant constitué par un sous-ensemble (13) à trois bornes.

## Claims

1. A capacitor bank protection device designed to be connected to conductors (R, S, T) of a three-phase electric power system, a device comprising a first group of capacitors (C1) star-connected to a first neutral point (N1), a second group of impedances (C2, R) star-connected to a second neutral point (N2), and a detection device for detecting a voltage unbalance between the first and second neutral points (N1, N2), the detection device commanding actuation of a disconnection device (1) of the bank when the unbalance exceeds a preset threshold, a protection device **characterized in that** the voltage unbalance detection device comprises a first resistive device with a first resistor (R1) between the first neutral point (N1) and a first mid-point (M1) and a second resistor (R2), of much lower value than the first, connected between the first mid-point (M1) and earth, at least a third resistor (R4, R5) comprising a first terminal connected to the second neutral point (N2) and a second terminal connected to earth, and an overvoltage relay (4) connected between the first mid-point (M1) and the first terminal of the third resistor (R4, R5).

2. The device according to claim 1, **characterized in that** the impedances of the second group of impedances are capacitors (C2) and that a fourth resistor (R3) of much higher value than the third (R4) is connected between the second neutral point (N2) and the first terminal of the third resistor (R4) so as to form a second resistive divider between the second neutral point (N2) and earth.

3. The device according to claim 1, **characterized in that** the impedances of the second group of impedances are resistors (R).

4. The device according to claim 3, **characterized in that** it comprises a plurality of modules (6) each comprising a capacitor (C1) of the first group and a resistor (R) of the second group connected in series between a first terminal of the module designed to be connected to the first neutral point (N1) and a second terminal of the module designed to be connected to the second neutral point (N2), a third terminal of the module connected to the point common to said capacitor and to said resistor being designed to be connected to one of the power system conductors (R, S, T).

5. The device according to any one of claims 1 to 3, **characterized in that** it comprises at least one single-phase module (12) comprising, in an enclosure (11), a capacitor (C1) connected in series with the first and second resistors (R1, R2) of a resistive divider between an input terminal of the module designed to be connected to one of the power system conductors (R, S, T) and the enclosure (11), a terminal of the module connected to the point common to said capacitor (C1) and to said first resistor (R1) being designed to be connected to the neutral point (N1) of the star to which said capacitor belongs, and another terminal of the module connected to the point common to said first and second resistors (R1, R2) forming the mid-point (M1) of said resistive divider.

6. The device according to any one of claims 1 to 3, **characterized in that** it comprises at least one three-phase module (10) comprising, in an enclosure (9), three capacitors (C1) star-connected between three input terminals of the module respectively designed to be connected to the power system conductors (R, S, T) and a neutral point (N1) situated inside the enclosure and connected to the enclosure by means of first and second resistors (R1, R2) of a resistive divider, a terminal of the module connected to the point common to said first and second resistors (R1, R2) forming the mid-point (M1) of said resistive divider.

7. The device according to any one of claims 1 to 3, **characterized in that** it comprises a three-phase module (7) comprising, in an enclosure (8), three capacitors (C1) star-connected between three input terminals of the module respectively designed to be connected to the power system conductors (R, S, T) and a terminal of the module forming the neutral point (N1), and three resistors (R) star-connected between the three input terminals and another terminal of the module forming the second neutral point (N2).

8. The device according to claim 3, **characterized in that** it comprises a plurality of resistors (R6) connected in parallel between the second neutral point (N2) and earth to form the third resistor (R5) and each forming a resistive divider with a resistor (R) of the second group of impedances, each resistive divider (R1, R2; R, R6) being formed by a sub-assembly (13) with three terminals.

## Patentansprüche

1. Anordnung zum Schutz einer an die Leiter (R, S, T) eines elektrischen Dreiphasennetzes anzuschließenden Kondensatorbatterie, welche Anordnung eine im Stern zusammengeschaltete erste Kondensatorgruppe (C1) mit einem ersten Sternpunkt (N1), eine im Stern zusammengeschaltete zweite Impedanzgruppe (C2, R) mit einem zweiten Sternpunkt (N2) sowie eine Detektionsschaltung zur Erfassung einer Spannungsabweichung zwischen dem ersten und dem zweiten Sternpunkt (N1, N2) umfasst, wobei die Detektionsschaltung die Betätigung einer Einrichtung (1) zur Abschaltung der Batterie bei Überschreiten eines bestimmten Schwellwerts der Spannungsabweichung steuert und die Schutzanordnung **dadurch gekennzeichnet ist, dass** die Detektionsschaltung zur Erfassung einer Spannungsabweichung einen ersten ohmschen Spannungsteiler mit einem zwischen den ersten Sternpunkt (N1) und einen ersten Mittelpunkt (M1) geschalteten ersten Widerstand (R) und einem gegenüber diesem ersten Widerstand erheblich kleineren, zwischen den ersten Mittelpunkt (M1) und Erde geschalteten zweiten Widerstand (R2), mindestens einen dritten Widerstand (R4, R5) mit einer, an den zweiten Sternpunkt (N2) angeschlossenen ersten Klemme sowie einer an Erde angeschlossenen zweiten Klemme sowie ein zwischen den ersten Mittelpunkt (M1) und die erste Klemme des dritten Widerstands (R4, R5) geschaltetes Überspannungsrelais (4) umfasst.

2. Anordnung nach Anspruch 1, **dadurch gekennzeichnet, dass** die Impedanzen der zweiten Impedanzgruppe durch Kondensatoren (C2) gebildet werden und dass ein gegenüber dem dritten Widerstand (R4) erheblich größerer vierter Widerstand (R3) zwischen den zweiten Sternpunkt (N2) und die erste Klemme des dritten Widerstands (R4) geschaltet ist, derart dass diese beiden Widerstände einen zwischen dem zweiten Sternpunkt (N2) und Erde liegenden, zweiten ohmschen Spannungsteiler bilden.

3. Anordnung nach Anspruch 1, **dadurch gekennzeichnet, dass** die Impedanzen der zweiten Impedanzgruppe durch ohmsche Widerstände (R) gebildet werden.

4. Anordnung nach Anspruch 3, **dadurch gekennzeichnet, dass** sie mehrere Module (6) mit jeweils einem der ersten Gruppe zugeordneten Kondensator (C1) und einem der zweiten Gruppe zugeordneten Widerstand (R) umfasst, die zwischen einer zum Anschluss an den ersten Sternpunkt (N1) bestimmten ersten Klemme des Moduls und einer zum Anschluss an den zweiten Sternpunkt (N2) bestimmten zweiten Klemme des Moduls in Reihe geschaltet sind, wobei eine an den gemeinsamen Anschlusspunkt des genannten Kondensators und des genannten Widerstands geführte dritte Klemme des Moduls dazu dient, mit einem der Leiter (R, S, T) des Netzes verbunden zu werden.

5. Anordnung nach irgendeinem der Ansprüche 1 bis 3, **dadurch gekennzeichnet, dass** sie mindestens ein Einphasenmodul (12) umfasst, das in einem Gefäß (11) eine zwischen einer zum Anschluss an einen der Leiter (R, S, T) des Netzes bestimmten Eingangsklemme des Moduls und dem Modul (11) geführte Reihenschaltung aus einem Kondensator (C1) sowie einem ersten und einem zweiten Widerstand (R1, R2) eines ohmschen Spannungsteilers enthält, wobei eine mit dem gemeinsamen Anschlusspunkt des genannten Kondensators (C1) und des genannten ersten Widerstands (R1) verbundene Klemme zum Anschluss an den Sternpunkt (N1) der Sternschaltung dient, welcher der genannte Kondensator zugeordnet ist, und eine mit dem gemeinsamen Anschlusspunkt des ersten und des zweiten Widerstands (R1, R2) verbundene andere Klemme des Moduls den Mittelpunkt (M1) des genannten ohmschen Spannungsteilers bildet.

6. Anordnung nach irgendeinem der Ansprüche 1 bis 3, **dadurch gekennzeichnet, dass** sie mindestens ein Dreiphasenmodul umfasst, das in einem Gefäß (9) drei Kondensatoren (C1), die in Sternschaltung zwischen drei zum Anschluss an die Leiter (R, S, T) des Netzes bestimmten Eingangsklemmen des Moduls und einen Sternpunkt (N1) geschaltet sind, welcher im Inneren des Gefäßes angeordnet und über einen ersten und einen zweiten Widerstand (R1, R2) eines ohmschen Spannungsteilers mit dem Gefäß verbunden ist, wobei eine mit dem gemeinsamen Anschlusspunkt des ersten und des zweiten Widerstands (R1, R2) verbundene Klemme den Mittelpunkt (M1) des genannten ohmschen Spannungsteilers bildet.

7. Anordnung nach irgendeinem der Ansprüche 1 bis 3, **dadurch gekennzeichnet, dass** sie ein Dreiphasenmodul (7) umfasst, das in einem Gefäß (8) drei Kondensatoren (C1), die in Sternschaltung zwischen drei zum Anschluss an die Leiter (R, S, T) des Netzes bestimmten Eingangsklemmen des Moduls und eine den ersten Sternpunkt (N1) bildende Klemme des Moduls geschaltet sind, sowie drei Widerstände (R) enthält, die in Sternschaltung zwischen die drei Eingangsklemmen des Moduls und eine weitere, den zweiten Sternpunkt (N2) bildende Klemme des Moduls geschaltet sind.

8. Anordnung nach Anspruch 3, **dadurch gekennzeichnet, dass** sie mehrere Widerstände (R6) umfasst, die zwischen dem zweiten Sternpunkt (N2) und Erde zur Bildung des dritten Widerstands (R5) parallel geschaltet sind und jeweils zusammen mit einem Widerstand (R) der zweiten Impedanzgruppe einen ohmschen Spannungsteiler bilden, wobei jeder ohmsche Spannungsteiler (R1, R2, R, R6) durch eine Baugruppe mit drei Klemmen gebildet wird.
